# EUROPÄISCHE PATENTSCHRIFT

(11) **EP 4 001 826 B1**
(45) Veröffentlichungstag und Bekanntmachung des Hinweises auf die Patenterteilung: **14.06.2023**
(21) Anmeldenummer: 21208519.5
(22) Anmeldetag: 16.11.2021
(51) Int. Cl.: G01B 1/00, G01B 3/02, G01B 3/1003, B43L 7/00

(54) **BASALTFASERVERSTÄRKTES MESSMITTEL UND VERFAHREN ZUR HERSTELLUNG EINES MESSBANDES**
BASALT FIBRE REINFORCED MEASURING MEANS AND METHOD OF MANUFACTURING A MEASURING TAPE
MOYEN DE MESURE RENFORCÉ PAR DES FIBRES DE BASALTE ET PROCÉDÉ DE FABRICATION D'UN RUBAN DE MESURE

(30) Priorität: 16.11.2020 DE 102020130183
(43) Veröffentlichungstag der Anmeldung: 25.05.2022
(73) Patentinhaber: Bayerische Mass-Industrie Arno Keller GmbH, 91217 Hersbruck (DE)
(72) Erfinder: Hubert, Ralf, 90765 Fürth (DE)
(74) Vertreter: Götz, Gudrun Veronika

(56) Entgegenhaltungen:
- EP-A1- 3 037 774
- EP-A2- 0 030 726
- CN-A- 102 645 205
- CN-U- 205 879 029
- DE-A1- 3 132 246
- JP-A- S63 198 801
- JP-A- 2002 048 501

## Beschreibung

Die Erfindung betrifft ein Messmittel, insbesondere ein Maßstab, Lineal oder Messband für Rollbandmaße, wobei das Messband entlang dessen Längsrichtung auf eine Messbandtrommel des Rollbandmaßes flexibel aufrollbar und entlang dessen Querrichtung flächig ausgebildet ist, wobei das Messband auf zumindest einer Seite Messmarkierungen aufweist, die entlang der Längsrichtung jeweils gleichmäßig zueinander beabstandet sind.

Die Erfindung betrifft ferner ein Verfahren zur Herstellung eines Messbandes mit einer Kunststoffmatrix sowie einem die Kunststoffmatrix bereichsweise durchsetzenden Verstärkungsmittel.

Zur Messung von Entfernungen werden im Vermessungswesen u. a. Rollbandmaße eingesetzt, die im Wesentlichen ein Gehäuse mit einer zu diesem relativ rotierbar gelagerten Messbandtrommel aufweisen. Das eigentliche Messmittel, ein üblicherweise entlang einer Querrichtung flach ausgebildetes Messband, wird zur Messung durch Rotation der Messbandtrommel von dieser abgerollt und lässt sich nach Gebrauch auch wieder auf die Messbandtrommel aufrollen. Entlang dessen Längsrichtung muss das Messband daher eine ausreichende Flexibilität aufweisen, um sich platzsparend auf der Messbandtrommel aufrollen zu lassen. Zur Durchführung der Längenmessung sind Messbänder üblicherweise auf einer oder auch auf beiden Seiten mit Messmarkierungen versehen, die entlang der Längsrichtung gleichmäßig zueinander beabstandet sind (z.B. einer Zentimeter- und/oder Millimeter-Skala). Beim Messen wird das Messband abgerollt, üblicherweise entlang des Bodens ausgelegt und zwischen den Messpunkten gespannt. Für Messbänder mit hoher Genauigkeitsklasse ist es folglich erforderlich, zu vermeiden, dass sich der Abstand zwischen den Messmarkierungen beim Spannen durch Dehnung des Messbandes erhöht. Die Dehnung kann entweder durch das Eigengewicht des Messbandes, durch Zugeinwirkung oder eine Temperaturausdehnung des Messbandes hervorgerufen werden und verfälscht das Messergebnis. Im Fachjargon spricht man von einer "Längung" des Bandes.

Gerade bei langen Messbändern z. B. ab ca. 10 Metern Länge, spielt daher die Wahl des Werkstoffs bzw. dessen von den Umgebungsbedingungen abhängige Werkstoffeigenschaften, insbesondere Zugfestigkeit oder Elastizitätsmodul, eine nicht unerhebliche Rolle für die Messgenauigkeit. Für Längenmessungen, die eine besonders hohe Genauigkeit erfordern, werden daher oftmals Messbänder aus Stahl verwendet. Stahl weist eine hohe Zugfestigkeit und ein hohes Elastizitätsmodul auf, wodurch die Längung des Messbandes minimiert wird. Nachteilig an Stahl ist jedoch, dass dieser einerseits elektrischen Strom leitet und andererseits auch verhältnismäßig steif ist bzw. leicht bricht. Oftmals werden Messbänder aus Stahl daher für kurze Taschenbandmaße, beispielsweise im Bereich von 3-5 Metern Länge, verwendet.

Eine mögliche Alternative zu Messbändern aus Stahl sind Kunststoffmessbänder, die sich jedoch unter Zugbelastung stärker längen, wodurch die Messgenauigkeit abnimmt. Aus dem Stand der Technik sind Messbänder aus Kunststoff bekannt, deren Zugfestigkeit durch Einbettung von Fasern in eine Kunststoffmatrix erhöht werden soll. Beispielsweise offenbart die DE 16 73 151 U ein mit einem Gewebe verstärktes Maßband. Sowohl die Längs- oder Kettgarne als auch die Quer- oder Schussgarne des Gewebes sind jeweils aus Glasgespinst hergestellt.

Aus der US 6,499,226 B1 ist ebenfalls ein Messband aus einem Verbundwerkstoff bekannt. Das Messband weist ein längliches Band aus einem kunststoffhaltigen Material, z.B. Polyvinylchlorid (PVC), auf. In diese Kunststoffmatrix ist eine, transversal zur Längsrichtung des Messbands ausgerichtete Anordnung aus Fasern eingebettet. Die Anordnung kann bspw. Kohlenstofffasern, Stahlfasern oder Glasfasern aufweisen, die jeweils entweder als Einzelfasern vorliegen oder zu Faserbündeln bzw. flachen Faserbündeln oder- bändern zusammengefasst sind. Als problematisch erweist sich bei der Verwendung von Kohlenstofffasern oder Stahlfasern, dass diese elektrischen Strom leiten und bspw. für einen Einsatz in der Nähe stromführender Leitungen ungeeignet sind. Kohlenstofffasern sind teuer, wodurch sich die Herstellungskosten für Rollbandmaße, gerade mit langen Messbändern bspw. mit bis zu 100 Metern Länge erheblich erhöhen. Glasfasern weisen außerdem ein gegenüber Stahl- oder Kohlenstofffasern geringeres Elastizitätsmodul auf.

Zur Verbesserung der Reißfestigkeit, insbesondere in Querrichtung, eines Messbandes sind in der EP 0 030 726 A2 neben kontinuierlichen und in Längsrichtung verlaufenden Verstärkungsmitteln zusätzliche Verstärkungsmittel in Form von geschnittenen Glas- oder Kohlefasern angeordnet.

Aus dem Stand der Technik sind Fasern aus weiteren Werkstoffen zur Verstärkung von Messbändern bekannt: Fasern aus Kunststoffen, wie Aramid können der DE 35 03 779 A1 und der WO 2005/065227 A2 entnommen werden, Kunststofffasern aus Polyester oder Nylon, aber auch Naturfasern sind aus der EP 0 100 138 A2 bekannt. Kunststofffasern sind allerdings nicht zur Erhöhung der Zugfestigkeit geeignet und werden daher auch nur in Verbindung mit Kohlenstofffasern verwendet. Letztere sind so vor mechanischen Einflüssen von außen geschützt. Nachteilig an Naturfasern ist insbesondere deren Quellfähigkeit, die wiederum zu einer ungewünschten Längung des Messbandes führen kann.

Die DE 313 22 46 A1 betrifft ein Messband mit einer Matrix aus hitzebeständigem synthetischem Harz und einer Einlage aus gewebter bzw. nicht gewebter Glasfaser. Durch Anordnung der Einlage entlang eines Bogens entlang des Querschnitts des Messbandes soll ein Messband mit besonders guten Selbststreckungseigenschaften hergestellt werden können.

Die JP S63 198 801 A realisiert ein Messband, welches weniger anfällig gegenüber Ausdehnung und Schrumpfung des Bandes infolge von Umwelteinflüssen wie Temperatur oder Feuchtigkeit ist. Hierfür wird das Band im Polyestermaterial hergestellt und mit einem Polyamidharz beschichtet.

Auch in der JP 2002 048 501 A soll die Gefahr einer unerwünschten Verlängerung des Messbandes verringert werden, indem die Messbandeinlage optimiert wird. Für die Verstärkungseinlage werden verschiedenste Materialien, Materialkombinationen, Ausbildungen und Anordnungen vorgeschlagen.

Ein bislang wenig erforschter und nur in einem begrenzten technischen Umfeld anwendungsreifer Werkstoff ist Basalt. Basalt ist ein natürlich vorkommendes Gestein mit einer Zusammensetzung von bspw. in etwa 52% SiO₂, 17% Al₂O₃, 9% CaO, 5% MgO und 17% sonstigen Bestandteilen (jeweils in Massenprozent). Zur technischen Weiterverarbeitung wird der Rohbasalt aufgeschmolzen und zu feinen Fäden oder Fasern ausgezogen. Endlosfasern können durch einen Spinnprozess aus der 1450°C heißen Schmelze mit haarfeinen Düsen gewonnen und dann auf Spulen oder Spindeln aufgewickelt werden. Basaltfasern ähneln in ihren Eigenschaften Keramikfasern und sind der Kategorie der Chemiefasern zuzuordnen. Die genaue chemische Zusammensetzung von Basaltfasern ist vom Herstellungsprozess abhängig.

Die Verwendung von Basaltfasern ist zum Beispiel aus der Luft- und Raumfahrt oder zur Verstärkung starrer bzw. fester Strukturen wie z. B. Rohrleitungen oder Betonbewehrung bekannt. Die EP 2 689 814 A1 schlägt die Verwendung von Basaltfasern für den Rahmen eines Tennisschlägers vor. Die WO 2018 232 136 A1 regt an, Basaltfasern bspw. als Trägermaterial für Sensoren zu verwenden.

In der CN 102708941 A sind Basaltfasern zur Verstärkung von Stromkabeln offenbart. Die Basaltfasern bilden in dieser Anwendung den inneren Kern eines Stromkabels und sind zu einem einzelnen Roving mit kreisrundem Querschnitt zusammengefasst. Der innere Kern des Stromkabels, also der Basaltfaser-Roving ist mit einem stromleitenden Aluminiumgeflecht umwickelt. Die äußerste Ummantelung des Kabels ist aus einer schützenden Polyester-Vliesschicht gebildet. Die Verwendung eines Verbunds, bei dem Fasern in eine Matrix eingebettet werden, ist der CN 102708941 A nicht zu entnehmen.

Es ist die Aufgabe der vorliegenden Erfindung, die Nachteile aus dem Stand der Technik zu eliminieren und ein gegenüber dem Stand der Technik verbessertes Messband herzustellen. Insbesondere sollen die Anwendungsbereiche für Messbänder bei gleichbleibend hoher Genauigkeitsklasse erweitert und deren Herstellungskosten gesenkt werden.

Die Aufgabe wird durch ein Messmittel gemäß Anspruch 1 gelöst.

Ein erfindungsgemäßes Messmittel, insbesondere Maßstab, Lineal oder Messband für Rollbandmaße, der eingangs näher beschriebenen Art kennzeichnet sich dadurch, dass das Messmittel eine Kunststoffmatrix sowie ein die Kunststoffmatrix bereichsweise durchsetzendes Verstärkungsmittel aufweist, wobei das Verstärkungsmittel Basaltfasern umfasst.

Durch die Verwendung eines Verstärkungsmittels mit Basaltfasern kann ein Messband bereitgestellt werden, welches derselben Genauigkeitsklasse zugeordnet werden kann, in die auch Messbänder mit Stahlfasern aufweisenden Verstärkungsmitteln einzuordnen sind. Die Materialeigenschaften von Basalt ähneln denen von Stahl. Dies hat den Vorteil, dass die zu messenden Strukturen (zumeist Stahl, z. B. Hochregallager oder auch Stahlbeton) bei Änderung der Umgebungsbedingungen, bspw. der Temperatur, sich ähnlich verhalten wie das Messband. Im Gegensatz zu einem Messband mit einem Verstärkungsmittel aus Stahl kann ein Messband mit einem Verstärkungsmittel aus Basalt auch in der Nähe stromführender Leitungen eingesetzt werden. Gegenüber einem Verstärkungsmittel aus Kohlenstoff ist Basalt zusätzlich kostengünstiger. Gegenüber einem Verstärkungsmittel mit Glasfasern ergibt sich ein erhöhtes Elastizitätsmodul und damit eine Verringerung einer unerwünschten Längung. Dies verbessert die Messgenauigkeit für Messbänder.

Das Verstärkungsmittel umfasst insbesondere Basalt-Einzelfasern und/oder BasaltFilamente und/oder Basalt-Flockfasern. Einzelfasern verlaufen quasi endlos oder mit mindestens 1000 Millimetern Länge zumeist kontinuierlich entlang einer der Längsrichtung des Messbandes. Als Flockfaser werden Fasern von geringer Länge (ca. 1 - 5 Millimetern) bezeichnet. Flockfasern können ungerichtet in die KunststoffMatrix eingebettet werden. Die Kunststoffmatrix ist vorzugsweise aus oder mit Polyvinylchlorid (PVC) gebildet. Andere Materialien wie thermoplastische Elastomere, thermoplastisches Polyurethan oder Nylon lassen sich aufgrund der niedrigeren Viskosität leichter verarbeiten und können prinzipiell auch verwendet werden. PVC ist darüber hinaus gegenüber Brüchen fester und damit langlebiger.

Vorteilhafte Ausführungsformen sind in den Unteransprüchen beansprucht und werden nachfolgend näher erläutert.

Grundsätzlich können die Basaltfasern des Verstärkungsmittels in beliebiger Ausrichtung in die Kunststoffmatrix eingebettet sein. In einer optionalen Ausführung des erfindungsgemäßen Messbandes erstrecken sich die Basaltfasern des Verstärkungsmittels, jedoch entlang der Längsrichtung und/oder entlang der Querrichtung des Messbandes.

Anders ausgedrückt verlaufen bzw. erstrecken sich die Basaltfasern innerhalb der durch die Längs- und Querrichtung des flach ausgeführten Messbands aufgespannten Ebene. Eine Erstreckung der Basaltfasern entlang der Querrichtung sowie entlang der Längsrichtung liegt zum Beispiel bei Verwendung eines Fasergewebes mit Quer- oder Schussfaden und Längs- oder Kettfaden vor. Bei einer Erstreckung entlang der Längsrichtung oder der Querrichtung müssen die die Basaltfasern und/oder Basaltfilamente nicht exakt entlang der entsprechenden Richtung verlaufen. Definitionsgemäß ist auch ein schräger, d. h. einen spitzen Winkel, kleiner 45° mit der Längs- bzw. Querrichtung des Messbandes einschließender Verlauf abgedeckt.

In einer bevorzugten Ausführungsform verlaufen die sich entlang der Längsrichtung des Messbandes erstreckenden Basaltfasern kontinuierlich.

Kontinuierlich bedeutet, dass die Basaltfasern die gesamte Längserstreckung des Messbandes ununterbrochen durchlaufen. Damit können eine oder mehrere Basaltfasern das Messband von einem Kopplungspunkt des Messbandes mit der Messbandtrommel zu einem Messwinkel oder einem Zugring vollständig durchsetzen. Eine solche Anordnung der Basaltfasern ist zur Erhöhung der Zugfestigkeit besonders vorteilhaft.

Besonders vorteilhaft ist es ferner, wenn das Verstärkungsmittel zu Faserbündeln und/oder zu Faserbändern und/oder zu Rovings zusammengefasste Basaltfasern aufweist, die sich entlang der Längsrichtung und/oder entlang der Querrichtung des Messbandes erstrecken.

Ein Faserbündel umfasst eine Mehrzahl oder Vielzahl an verdrillten oder unverdrillten Basaltfasern, insbesondere Basalt-Einzelfasern, wobei das Faserbündel einen im Wesentlichen kreisförmigen Querschnitt aufweist. Ein Faserband umfasst eine Mehrzahl oder Vielzahl an verdrillten oder unverdrillten Basaltfasern, insbesondere Basalt-Einzelfasern, mit einem sich im Wesentlichen entlang der Querrichtung erstreckenden, länglichen Querschnitt. Der Querschnitt der Faserbänder kann näherungsweise die Form eines länglichen Rechtecks und/oder einer Ellipse aufweisen. Die Verwendung von Faserbändern bewirkt gegenüber Faserbündeln eine verbesserte Steifigkeit entlang der Querrichtung des Messbandes, wodurch ein unbeabsichtigtes Verdrehen oder Knicken des Messbandes vermieden wird. Rovings sind meist nicht verdrillte, d.h. zueinander parallel verlaufende Faserbündel oder Faserbänder. Der Querschnitt eines Rovings ist meist elliptisch oder rechteckig. Allerdings gibt es auch Rovings mit einer leichten Schutzdrehung (z. B. 10 Drehungen pro Meter), wodurch der Querschnitt kreisförmiger wird. Als Direktroving werden Rovings unmittelbar durch parallele und/oder nicht verdrillte Zusammenfassung der ersponnenen Filamente nach Auftrag einer Schlichte, d.h. einem Imprägniermittel, gebildet. Durch den Auftrag der Schlichte wird ein besserer Zusammenhalt der Filamente im Roving und/oder des Rovings mit der Kunststoffmatrix des Messbandes erreicht.

Vorzugsweise sind ein oder mehrere, aus Basaltfasern zusammengefasste, Rovings, insbesondere drei, vier oder fünf Rovings, parallel zueinander und entlang der Querrichtung des Messbandes, insbesondere gleichmäßig, zueinander beabstandet angeordnet und durchsetzen das Messband entlang der Längsrichtung kontinuierlich.

Durch die Ausbildung der Verstärkungsmittel mit Rovings wird bei der Herstellung eine ungewollte Bündelung oder Verschiebung der Basaltfasern in der noch zähen Kunststoffmatrix verhindert. Eine unbeabsichtigte Verschiebung der Rovings entlang der Querrichtung wird durch ein benachbartes Roving als Barriere blockiert. Dadurch wird bei vereinfachter Herstellung eine gleichmäßige, ebene Messbandoberfläche erzielt. Insbesondere eine Anordnung von drei flachen Rovings entlang der Querrichtung des Messbandes verhindert effektiv die ungewollte Bündelung in der Kunststoffmatrix.

In einer bevorzugten Ausführungsform der Erfindung weist das Verstärkungsmittel Basaltfasern auf, die zu einem Gewebe angeordnet sind, wobei die Basaltfasern teilweise entlang der Längsrichtung und teilweise entlang der Querrichtung des Messbandes verlaufen.

Durch Anordnen der Basaltfasern zu einem Gewebe in der Kunststoffmatrix des Messbandes mit Schuss- und Kettfäden wird die Strapazierfähigkeit und Langlebigkeit des Messbandes verbessert. Ein Teil der Basaltfasern verläuft hierbei entlang der Längsrichtung, der andere Teil entlang der Querrichtung, wodurch nicht nur die Zugfestigkeit in Längsrichtung, sondern auch die Zugfestigkeit in Querrichtung verbessert wird.

Zusätzlich zu den Basaltfasern weist in einer optionalen Weiterbildung der Erfindung das Verstärkungsmittel zu Faserbündeln und/oder zu Faserbändern und/oder zu Rovings zusammengefasste und/oder zu einem Gewebe angeordnete Kohlefasern und/oder Glasfasern und/oder Stahlfasern auf.

Durch die Kombination verschiedener Materialien kann ein Verstärkungsmittel mit optimalen Eigenschaften bereitgestellt werden. So verbessert sich bspw. das Elastizitätsmodul gegenüber einem Messband mit einem Verstärkungsmittel aus Glasfasern, wenn ein Teil der Glasfasern durch Basaltfasern ersetzt wird. Ferner können sich die Herstellungskosten gegenüber einem Messband mit einem Verstärkungsmittel aus Kohlefasern bereits dann verringern, wenn ein Teil der Kohlefasern durch Basaltfasern ersetzt wird. Vorzugsweise werden Basaltfasern, zusammen mit Fasern aus anderen Werkstoffen bereits während der Herstellung des Messbandes zur Ausbildung des Verstärkungsmittels gemeinsam bereitgestellt.

Die eingangs gestellte Aufgabe wird ferner durch ein Herstellungsverfahren für ein Messband, insbesondere für ein Messband nach einer der zuvor beschriebenen Ausführungsformen, gemäß Anspruch 9 gelöst.

Ein erfindungsgemäßes Herstellungsverfahren der eingangs näher beschriebenen Art kennzeichnet sich dadurch, dass
- in einem ersten Schritt eine oder mehrere Basaltfasern, insbesondere in Form von Faserbündeln und/oder Faserbändern und/oder Rovings, bereitgestellt werden,
- in einem, insbesondere auf den ersten Schritt folgenden, zweiten Schritt das Verstärkungsmittel, welches die bereitgestellten Basaltfasern aufweist, ausgebildet wird, wobei das Verstärkungsmittel mit den Basaltfasern in die Kunststoffmatrix eingebettet wird, sodass das Verstärkungsmittel und die Kunststoffmatrix einen stoff- und/oder reib- und/oder formschlüssigen Verbund, also ein Verbundmaterial, miteinander ausbilden, und
- in einem, insbesondere auf den zweiten Schritt folgenden, dritten Schritt das Messband auf zumindest einer Seite mit Messmarkierungen versehen wird.

In dem ersten Schritt können zusätzlich zu Basaltfasern auch Fasern mit einem anderen Material eingesetzt werden. Durch die Anwendung des Herstellungsverfahren welches in dem ersten Schritt Basaltfasern verwendet, kann ein Messband bereitgestellt werden, welches die gleiche Messgenauigkeit wie ein Messband mit Stahlfasern als Verstärkungsmittel aufweist. Für weitere Vorteile eines Messbandes mit Basalt als Verstärkungsmittel wird auf die obigen Ausführungen verwiesen.

Vorteilhafte Ausführungsformen sind in den Unteransprüchen beansprucht und werden nachfolgend näher erläutert.

In einer optionalen Ausführung des erfindungsgemäßen Herstellungsverfahrens werden die Basaltfasern im ersten Schritt kontinuierlich bereitgestellt und das Verstärkungsmittel mit den Basaltfasern mittels Thermoformen, insbesondere mittels Kaschieren, Extrudieren, Laminieren, Pultrudieren, Spritzgießen und/oder Tauchziehen kontinuierlich in die Kunststoffmatrix eingebettet.

Kontinuierlich heißt, dass die Basaltfasern in der Art von Meterware oder Halbzeugen bereitgestellt, bspw. sind sie als Spule aufgewickelt und werden zur Herstellung des Messbandes von der Spule abgewickelt. Ebenfalls kontinuierlich erfolgt der zweite Schritt, das Einbetten des Verstärkungsmittels mit Basaltfasern in die Kunststoffmatrix. Ein solches Endlosmessband wird anschließend, vor und/oder nach dem Anbringen von Messmarkierungen auf die gewünschte Länge, gekürzt. Für die Kunststoffmatrix zum Ausbilden des Verbundmaterials wird thermoplastisches Material, insbesondere PVC, verwendet.

Besonders vorteilhaft ist es, wenn das Messband in einem, insbesondere auf den zweiten Schritt folgenden Zusatzschritt auf die gewünschte Länge gekürzt wird, wobei die Länge der Basaltfasern im Wesentlichen der Länge des Messbands entspricht. Dieser Zusatzschritt kann vor oder nach dem Anbringen der Messmarkierungen erfolgen.

Vorzugsweise werden die Basaltfasern in der Kunststoffmatrix, gleichmäßig und/oder regelmäßig angeordnet, entlang einer Querrichtung des Messbands bereitgestellt und/oder eingebettet.

Die gleichmäßige oder regelmäßige Verteilung der Verstärkungsmittel erfolgt durch mehrere Einzelfasern, Bündel, Bänder oder Rovings, die mit regelmäßigem Abstand nebeneinander und parallel zueinander ausgerichtet sind. Dadurch wird erreicht, dass das Messband über die gesamte Querschnittsfläche eine einheitliche Dicke oder Höhe aufweist. Durch die gleichmäßige Verteilung der Verstärkungsmittel wird ferner eine unerwünschte Agglomeration der Verstärkungsmittel verhindert, die beim Herstellungsverfahren, bedingt durch das hochviskose Fließverhalten der Kunststoffmatrix aus PVC, zu einer ungleichmäßigen Verteilung und zu einer Ansammlung der Basaltfasern in einem mittigen Bereich der Querschnittsfläche führen würde.

In einer besonders bevorzugten Ausführung des Herstellungsverfahrens werden die Basaltfasern in Form eines oder mehrerer Rovings bereitgestellt, wobei die Rovings in einem, insbesondere dem ersten Schritt vorangehenden Vorbereitungsschritt mit einer Schlichte beaufschlagt oder überzogen werden, wobei die chemische Zusammensetzung der Schlichte auf die chemische Zusammensetzung der Kunststoffmatrix des Messbands abgestimmt ist.

Rovings können bereits beim Herstellen der Basaltfasern bzw. der Rovings mit der gewünschten Schlichte überzogen werden. Alternativ ist aber auch denkbar, Basaltfasern oder Rovings unmittelbar vor dem Herstellen des Messbandes mit einer Schlichte zu überziehen. Durch den Auftrag der Schlichte wird ein gewisser Zusammenhalt der Filamente im Roving und/oder des Rovings mit der Kunststoffmatrix des Messbandes erreicht. Es können Polymerdispersionen aus Ethylenvinylacetat, Polyester, Epoxidharz, Polyurethan, aber auch Naturstoffen wie Stärke eingesetzt werden. In Schlichten auf Basis von Polymeren gehen auch noch andere Hilfsmittel wie Antistatika, Gleitmittel und Haftvermittler wie Silane ein. Der Gewichtsanteil von Schlichte an der getrockneten Basaltfaser liegt vorzugsweise bei ca. 0,5 %.

Weitere Einzelheiten, Merkmale, Merkmals(unter)kombinationen, Vorteile und Wirkungen auf der Basis der Erfindung ergeben sich aus der nachfolgenden Beschreibung bevorzugter Ausführungsbeispiele der Erfindung und den Zeichnungen. Diese zeigen in
- Fig. 1: eine Prinzipskizze eines Messbandes in einer beispielhaften Ausführungsform der Erfindung, in
- Fig. 2a-e: eine Schnittdarstellung eines Messbandes mit Basaltfasern in einer beispielhaften Ausführungsform der Erfindung, in
- Fig. 3a-b: eine Schnittdarstellung eines Messbandes mit Fasern aus verschiedenen Materialien in einer beispielhaften Ausführungsform der Erfindung und in
- Fig. 4: ein Ablaufdiagramm eines Herstellungsverfahrens in einer beispielhaften Ausführungsform der Erfindung.

Die Figuren sind lediglich beispielhafter Natur und dienen nur dem Verständnis der Erfindung. Die gleichen Elemente sind mit denselben Bezugszeichen versehen.

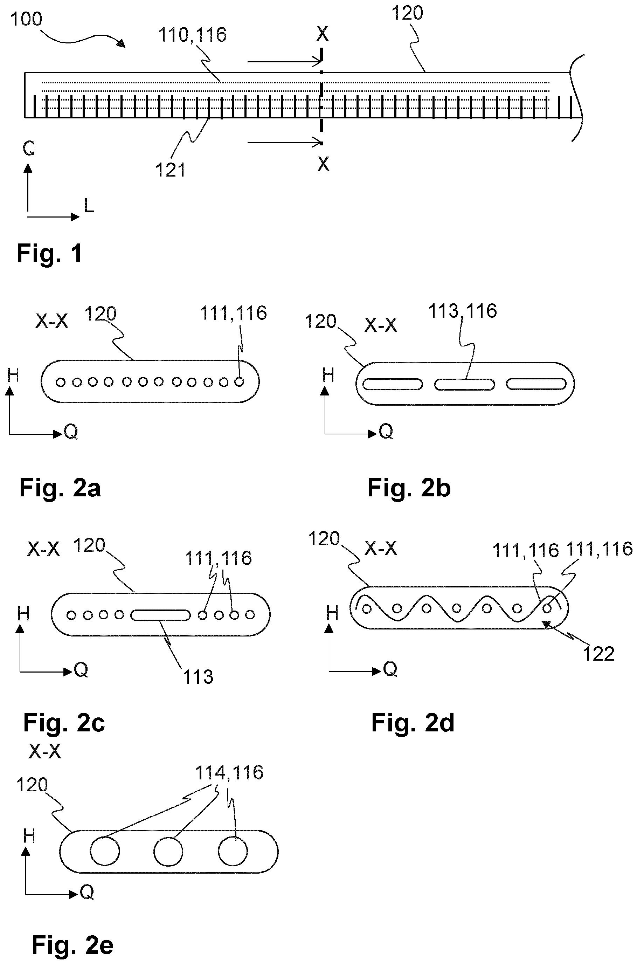

Fig. 1 zeigt ein Messband 100 bzw. einen Abschnitt eines Messbandes 100 für Rollbandmaße, das entlang einer Längsrichtung L auf eine Messbandtrommel des Bandmaßes oder Taschenbandmaßes flexibel aufrollbar und entlang dessen Querrichtung Q flächig ausgebildet ist. Das Messband 100 weist auf zumindest einer Seite Messmarkierungen 121 auf, die entlang der Längsrichtung L des Messbandes jeweils gleichmäßig oder regelmäßig zueinander beabstandet sind und eine Messskala für Längenmessungen aufweisen. Das Messband 100 weist eine Kunststoffmatrix 120 auf, die entlang der Längsrichtung L vollständig oder bereichsweise von einem Verstärkungsmittel 110 durchsetzt ist, wobei das Verstärkungsmittel 110 Basaltfasern 116 umfasst. Das Verstärkungsmittel 110 ist mit den Basaltfasern 116 in die Kunststoffmatrix 120 eingebettet, sodass das Verstärkungsmittel 110 und die Kunststoffmatrix 120 einen stoff- und/oder formschlüssigen Verbund miteinander ausbilden. Vorzugsweise werden die Messmarkierungen 121 durch Bedrucken der ausgehärteten Kunststoffmatrix 120 bereitgestellt, können aber auch mit anderen Markierungsverfahren erstellt werden. Die Basaltfasern 116 werden mittels Thermoformen, insbesondere mittels Kaschieren, Extrudieren, Laminieren, Pultrudieren, Spritzgießen und/oder Tauchziehen kontinuierlich in die Kunststoffmatrix eingebettet.

Fig. 2a-2e zeigen verschiedene Anordnungen von Basaltfasern 116 in der Kunststoffmatrix 120 innerhalb eines Querschnitts durch die Schnittebene X-X (vgl. Fig. 1). In Figur 2a sind Basaltfasern 116 als kontinuierliche Einzelfasern 111 des Verstärkungsmittels 110 vorgesehen, die sich entlang der Längsrichtung L des Messbandes 100 erstrecken und kontinuierlich verlaufen. In Figur 2b sind Basaltfasern 116 zu mehreren Faserbändern 113 zusammengefasst, die sich vorzugsweise entlang der Längsrichtung L und der Querrichtung Q des Messbandes 100 erstrecken und kontinuierlich verlaufen. Mehrere Faserbänder 113 sind vorzugsweise in einer Ebene angeordnet, die durch die Längsrichtung L und die Querrichtung Q aufgespannt wird. In Figur 2c sind sowohl Einzelfasern 111, also auch ein Faserband 113 mit Basaltfasern 116 vorgesehen, wobei das Faserband 113 bzgl. der Querrichtung Q mittig zwischen den Einzelfasern 111 angeordnet ist. In Figur 2d sind Einzelfasern mit Basaltfasern 116 zu einem Gewebe 122 verflochten. In anderen Worten, das Verstärkungsmittel 110 weist zu einem Gewebe 122 angeordnete Basaltfasern 116, insbesondere Einzelfasern 111, auf, wobei die Basaltfasern 116 sowohl entlang der Längsrichtung L, als auch teilweise entlang der Querrichtung Q und der Hochrichtung H des Messbandes 100 verlaufen. In Figur 2e sind Basaltfasern 116 zu mehreren Rovings 114 zusammengefasst, die sich vorzugsweise entlang der Längsrichtung L des Messbandes 100 erstrecken und kontinuierlich verlaufen. Drei aus Basaltfasern 116 zusammengefasste Rovings 114 verlaufen parallel zueinander und sind entlang der Querrichtung Q des Messbandes 100 gleichmäßig beabstandet zueinander angeordnet.

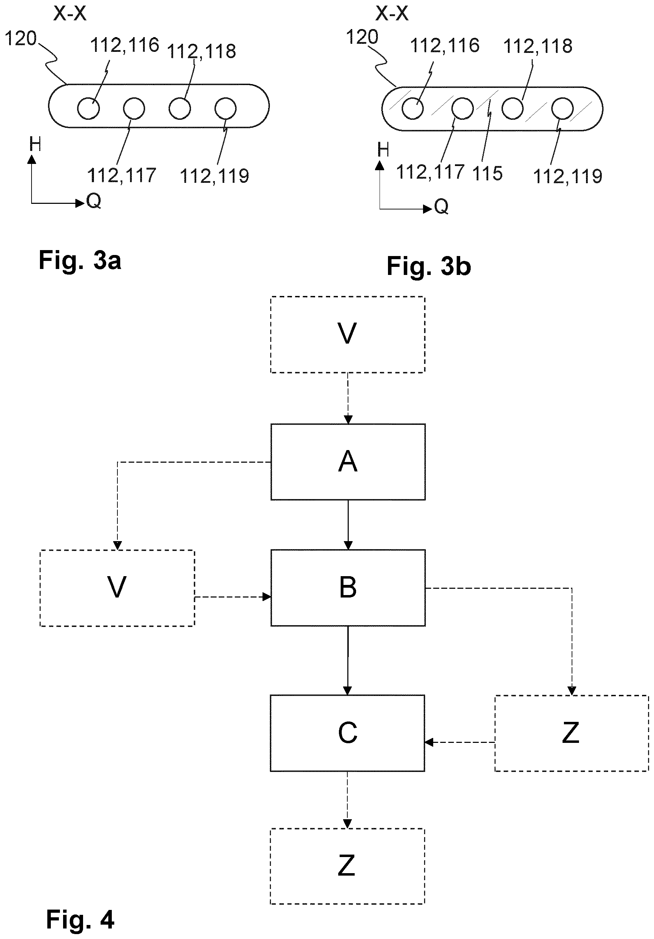

Figuren 3a-3b zeigen verschiedene Anordnungen eines Verstärkungsmittels 110, wobei das Verstärkungsmittel 110 nicht nur Basaltfasern 116, sondern auch Kohlefasern 117 und/oder Glasfasern 118 und/oder Stahlfasern 119 aufweist. In Figur 3a sind exemplarisch vier Faserbündel 112 angeordnet, wobei ein Faserbündel 112 aus Basaltfasern 116, ein Faserbündel 112 aus Kohlefasern 117, ein Faserbündel 112 aus Glasfasern 118 und ein Faserbündel 112 aus Stahlfasern 119 besteht. In Figur 3b sind zusätzlich Flockfasern 115, bspw. aus Basaltfasern in der Kunststoffmatrix 120 angeordnet, um zusätzlich die Steifigkeit des Messbandes 100 in Querrichtung Q zu verbessern.

Figur 4 zeigt ein Ablaufdiagramm eines Verfahrens zur Herstellung eines Messbandes 100 mit einer Kunststoffmatrix 120 sowie mit einem die Kunststoffmatrix 120 bereichsweise durchsetzenden Verstärkungsmittel 110 (vgl. Figur 1). In einem ersten Schritt A werden Basaltfasern 116, insbesondere in Form von Faserbündeln 112 und/oder Faserbändern 113 und/oder Rovings 114 für ein Verstärkungsmittel 110 bereitgestellt. In einem zweiten Schritt B wird das Verstärkungsmittel 110 in die Kunststoffmatrix 120 eingebettet, sodass das Verstärkungsmittel 110 und die Kunststoffmatrix 120 einen stoff- und/oder formschlüssigen Verbund miteinander ausbilden. Während die Basaltfasern 116 kontinuierlich von einer Spule abgewickelt werden, wird mittels Thermoformen, insbesondere mittels Kaschieren, Extrudieren, Laminieren, Pultrudieren, Spritzgießen und/oder Tauchziehen kontinuierlich die Kunststoffmatrix 120 ausgebildet, sodass die Verstärkungsmittel 110 von der Kunststoffmatrix 120 umhüllt, umschlossen oder wenigstens teilweise abgedeckt werden. Das Messband 100 wird in einem auf den zweiten Schritt B und/oder den dritten Schritt C folgenden Zusatzschritt Z auf die gewünschte Länge gekürzt. Dadurch entspricht auch die Länge der Basaltfasern 116 im Wesentlichen der Länge des Messbands 100. Werden die Basaltfasern 116 in Form eines Rovings 114 bereitgestellt, wird vor und/oder nach dem ersten Schritt A ein Vorbereitungsschritt V durchgeführt, bei dem die Basaltfasern 116, insbesondere in einer Anordnung als Roving 114, mit einer Schlichte überzogen werden.

### Bezugszeichenliste

- 100: Messband
- 110: Verstärkungsmittel, insbesondere Verstärkungseinlage
- 111: Einzelfaser
- 112: Faserbündel
- 113: Faserband
- 114: Roving
- 115: Flockfaser
- 116: Basaltfaser
- 117: Kohlefaser
- 118: Glasfaser
- 119: Stahlfaser
- 120: Kunststoffmatrix
- 121: Messmarkierungen
- 122: Gewebe
- A: Erster Schritt
- B: Zweiter Schritt
- C: Dritter Schritt
- H: Hochrichtung
- L: Längsrichtung
- Q: Querrichtung
- X-X: Schnittebene
- V: Vorbereitungsschritt
- Z: Zusatzschritt

## Patentansprüche

1. Messmittel (100), insbesondere Maßstab oder Lineal, welches Messmittel (100) entlang einer Längsrichtung (L) flexibel und/oder biegsam ist und entlang dessen Querrichtung (Q) flächig ausgebildet ist, wobei das Messmittel auf zumindest einer Seite Messmarkierungen (121) aufweist, die entlang dessen Längsrichtung (L) jeweils gleichmäßig oder regelmäßig zueinander beabstandet sind,
**dadurch gekennzeichnet, dass**
das Messmittel (100) eine Kunststoffmatrix (120) sowie ein die Kunststoffmatrix (120) bereichsweise durchsetzendes Verstärkungsmittel (110) aufweist, wobei das Verstärkungsmittel (110) Basaltfasern (116) umfasst.

2. Messmittel (100) nach Anspruch 1, wobei das Messmittel ein Messband (100) für Rollbandmaße ist, wobei das Messband (100) entlang einer Längsrichtung (L) auf eine Messbandtrommel des Rollbandmaßes flexibel aufrollbar und entlang dessen Querrichtung (Q) flächig ausgebildet ist,
**dadurch gekennzeichnet, dass**
das Messband (100) eine Kunststoffmatrix (120) sowie ein die Kunststoffmatrix (120) bereichsweise durchsetzendes Verstärkungsmittel (110) aufweist, wobei das Verstärkungsmittel (110) Basaltfasern (116) umfasst.

3. Messband (100) nach Anspruch 2,
**dadurch gekennzeichnet, dass**
sich die Basaltfasern (116) des Verstärkungsmittels (110), entlang der Längsrichtung (L) und/oder entlang der Querrichtung (Q) des Messbandes (100) erstrecken.

4. Messband (100) nach Anspruch 3,
**dadurch gekennzeichnet, dass**
die sich entlang der Längsrichtung (L) des Messbandes (100) erstreckenden Basaltfasern (116) kontinuierlich verlaufen.

5. Messband (100) nach einem der Ansprüche 2-4,
**dadurch gekennzeichnet, dass**
das Verstärkungsmittel (110) zu Faserbündeln (112) und/oder zu Faserbändern (113) und/oder zu Rovings (114) zusammengefasste Einzelfasern (111) und/oder Basaltfasern (116) aufweist, die sich entlang der Längsrichtung (L) und/oder entlang der Querrichtung (Q) des Messbandes (100) erstrecken.

6. Messband nach Anspruch 5,
**dadurch gekennzeichnet, dass**
ein oder mehrere, aus Einzelfasern (111) und/oder Basaltfasern (116) zusammengefasste Rovings (114), insbesondere drei, vier oder fünf Rovings (114), parallel zueinander und entlang der Querrichtung (Q) des Messbandes (100), insbesondere gleichmäßig, zueinander beabstandet angeordnet sind und die Rovings (114) das Messband (100) entlang der Längsrichtung (L) kontinuierlich durchsetzen.

7. Messband (100) nach einem der Ansprüche 2-6,
**dadurch gekennzeichnet, dass**
das Verstärkungsmittel (110) zu einem Gewebe (122) angeordnete, insbesondere als Einzelfasern (111) ausgebildete Basaltfasern (116) aufweist, wobei die Basaltfasern (116) teilweise entlang der Längsrichtung (L) und teilweise entlang der Querrichtung (Q) des Messbandes (100) verlaufen.

8. Messband (100) nach einem der Ansprüche 2-6,
**dadurch gekennzeichnet, dass**
das Verstärkungsmittel (110) als Einzelfasern (111) ausgebildete und/oder zu Faserbündeln (112) und/oder zu Faserbändern (113) und/oder zu Rovings (114) zusammengefasste und/oder zu einem Gewebe (122) angeordnete Kohlefasern (117) und/oder Glasfasern (118) und/oder Stahlfasern (119) aufweist.

9. Verfahren zur Herstellung eines Messbandes (100), insbesondere eines Messbandes (100) nach einem der Ansprüche 2-8, mit einer Kunststoffmatrix (120) sowie einem die Kunststoffmatrix (120) bereichsweise durchsetzenden Verstärkungsmittel (110),
**dadurch gekennzeichnet, dass**
- in einem ersten Schritt (A) eine oder mehrere Basaltfasern (116), insbesondere in Form von Faserbündeln (112) und/oder Faserbändern (113) und/oder Rovings (114), bereitgestellt werden,
- in einem, insbesondere auf den ersten Schritt (A) folgenden, zweiten Schritt (B) das die bereitgestellten Basaltfasern (116) aufweisende Verstärkungsmittel (110) ausgebildet wird, wobei das Verstärkungsmittel (110) mit den Basaltfasern (116) in die Kunststoffmatrix (120) eingebettet wird, sodass das Verstärkungsmittel (110) und die Kunststoffmatrix (120) einen stoff- und/oder formschlüssigen Verbund miteinander ausbilden, und
- in einem, insbesondere auf den zweiten Schritt (B) folgenden, dritten Schritt (C) das Messband (100) auf zumindest einer Seite mit Messmarkierungen (121) versehen wird.

10. Herstellungsverfahren nach Anspruch 9,
**dadurch gekennzeichnet, dass**
die Basaltfasern (116) im ersten Schritt (A) kontinuierlich bereitgestellt werden und das Verstärkungsmittel (110) mit den Basaltfasern (116) mittels Thermoformen, insbesondere mittels Kaschieren, Extrudieren, Laminieren, Pultrudieren, Spritzgießen und/oder Tauchziehen kontinuierlich in die Kunststoffmatrix (120), eingebettet wird.

11. Herstellungsverfahren nach einem der Ansprüche 9 oder 10,
**dadurch gekennzeichnet, dass**
das Messband (100) in einem, insbesondere auf den zweiten Schritt (B) folgenden Zusatzschritt (Z) auf die gewünschte Länge gekürzt wird, wobei die Länge der Basaltfasern (116) der Länge des Messbands (100) entspricht.

12. Herstellungsverfahren nach einem der Ansprüche 9 - 11,
**dadurch gekennzeichnet, dass**
die Basaltfasern (116) in der Kunststoffmatrix (120) entlang einer Querrichtung (Q) des Messbands (100) gleichmäßig und/oder regelmäßig angeordnet bereitgestellt und/oder eingebettet werden.

13. Herstellungsverfahren nach einem der Ansprüche 9 - 12,
**dadurch gekennzeichnet, dass**
die Basaltfasern (116) in Form eines oder mehrerer Rovings (114) bereitgestellt werden, wobei die Rovings (114) in einem, insbesondere dem ersten Schritt (A) vorangehenden Vorbereitungsschritt (V) mit einer Schlichte beaufschlagt oder überzogen werden, wobei die chemische Zusammensetzung der Schlichte auf die chemische Zusammensetzung der Kunststoffmatrix (120) des Messbands (100) abgestimmt ist.

## Claims

1. A measuring means (100), in particular a rule or ruler, which measuring means (100) is flexible and/or pliable along a longitudinal direction (L) and flat along its transverse direction (Q), wherein the measuring means has measuring markings (121) on at least one side which are spaced apart from one another respectively evenly or regularly along its longitudinal direction (L),
**characterised in that**
the measuring means (100) has a plastic matrix (120) as well as a reinforcing agent (110) passing through the plastic matrix (120) in parts, wherein the reinforcing agent (110) comprises basalt fibres (116).

2. The measuring means (100) according to claim 1, wherein the measuring means is a measuring tape (100) for tape rules, wherein the measuring tape (100) can be rolled up flexibly on a tape reel of the tape rule along a longitudinal direction (L) and is flat along its transverse direction (Q),
**characterised in that**
the measuring tape (100) has a plastic matrix (120) as well as a reinforcing agent (110) passing through the plastic matrix (120) in parts, wherein the reinforcing agent (110) comprises basalt fibres (116).

3. The measuring tape (100) according to claim 2,
**characterised in that**
the basalt fibres (116) of the reinforcing agent (110) extend along the longitudinal direction (L) and/or along the transverse direction (Q) of the measuring tape (100).

4. The measuring tape (100) according to claim 3,
**characterised in that**
the basalt fibres (116) extending along the longitudinal direction (L) of the measuring tape (100) run continuously.

5. The measuring tape (100) according to one of claims 2-4,
**characterised in that**
the reinforcing agent (110) has individual fibres (111) and/or basalt fibres (116) combined to form fibre bundles (112) and/or fibre tapes (113) and/or rovings (114), which fibres extend along the longitudinal direction (L) and/or along the transverse direction (Q) of the measuring tape (100).

6. The measuring tape according to claim 5,
**characterised in that**
one or more rovings (114), in particular three, four or five rovings (114), made up of individual fibres (111) and/or basalt fibres (116), are arranged spaced apart from one another, in particular evenly, parallel to one another and along the transverse direction (Q) of the measuring tape (100), and the rovings (114) pass through the measuring tape (100) along the longitudinal direction (L) continuously.

7. The measuring tape (100) according to one of claims 2-6,
**characterised in that**
the reinforcing agent (110) has basalt fibres (116), in particular as individual fibres (111), arranged into a web (122), wherein the basalt fibres (116) run partly along the longitudinal direction (L) and partly along the transverse direction (Q) of the measuring tape (100).

8. The measuring tape (100) according to one of claims 2-6,
**characterised in that**
the reinforcing agent (110) has carbon fibres (117) and/or glass fibres (118) and/or steel fibres (119) as individual fibres (111) and/or combined to form fibre bundles (112) and/or fibre tapes (113) and/or rovings (114) and/or arranged into a web (122).

9. A method for producing a measuring tape (100), in particular a measuring tape (100) according to one of claims 2-8, with a plastic matrix (120) as well as a reinforcing agent (110) passing through the plastic matrix (120) in parts,
**characterised in that**
- one or more basalt fibres (116), in particular in the form of fibre bundles (112) and/or fibre tapes (113) and/or rovings (114), are provided in a first section (A),
- in a second section (B), in particularly following the first section (A), the reinforcing agent (110) having the provided basalt fibres (116) is shaped, wherein the reinforcing agent (110) is embedded with the basalt fibres (116) into the plastic matrix (120), with the result that the reinforcing agent (110) and the plastic matrix (120) form a composite material with one another which is substance-locking and/or form-locking, and
- in a third step (C), in particular following the second step (B), the measuring tape (100) is provided with measuring markings (121) on at least one side.

10. The production method according to claim 9,
**characterised in that**
the basalt fibres (116) are provided continuously in the first step (A) and the reinforcing agent (110) with the basalt fibres (116) is embedded continuously into the plastic matrix (120) by means of thermoforming, in particular by means of coating, extruding, laminating, pultruding, injection moulding and/or dip coating.

11. The production method according to one of claims 9 or 10,
**characterised in that**
the measuring tape (100) is shortened to the desired length in an additional step (Z), in particular following the second step (B), wherein the length of the basalt fibres (116) corresponds to the length of the measuring tape (100).

12. The production method according to one of claims 9-11,
**characterised in that**
the basalt fibres (116) are provided and/or embedded in the plastic matrix (120), evenly and/or regularly, along a transverse direction (Q) of the measuring tape (100).

13. The production method according to one of claims 9-12,
**characterised in that**
the basalt fibres (116) are provided in the form of one or more rovings (114), wherein the rovings (114) are loaded or overlaid with a facing in a preparation step (V) in particular preceding the first step (A), wherein the chemical composition of the facing is matched to the chemical composition of the plastic matrix (120) of the measuring tape (100).

## Revendications

1. Moyen de mesure (100), en particulier mètre ou règle, lequel moyen de mesure (100) est flexible et/ou pliable le long d'une direction longitudinale (L) et est conçu de manière plane le long de sa direction transversale (Q), le moyen de mesure présentant sur au moins un côté des repères de mesure (121) qui sont espacés les uns des autres de manière régulière ou ordonnée le long de sa direction longitudinale (L),
**caractérisé en ce que**
le moyen de mesure (100) comprend une matrice en matière plastique (120) ainsi qu'un moyen de renforcement (110) traversant par endroits la matrice en matière plastique (120), dans lequel le moyen de renforcement (110) comprend des fibres de basalte (116).

2. Moyen de mesure (100) selon la revendication 1, dans lequel le moyen de mesure est une bande de mesure (100) pour mètre à ruban, la bande de mesure (100) pouvant être enroulée de manière flexible sur un tambour de bande de mesure du mètre à ruban le long d'une direction longitudinale (L) et étant conçue de manière plane le long de sa direction transversale (Q),
**caractérisé en ce que**
la bande de mesure (100) comprend une matrice en matière plastique (120) ainsi qu'un moyen de renforcement (110) traversant par endroits la matrice en matière plastique (120), dans laquelle le moyen de renforcement (110) comprend des fibres de basalte (116).

3. Bande de mesure (100) selon la revendication 2,
**caractérisée en ce que**
les fibres de basalte (116) du moyen de renforcement (110) s'étendent le long de la direction longitudinale (L) et/ou le long de la direction transversale (Q) de la bande de mesure (100).

4. Bande de mesure (100) selon la revendication 3,
**caractérisée en ce que**
les fibres de basalte (116) qui s'étendent le long de la direction longitudinale (L) de la bande de mesure (100) se développent de façon continue.

5. Bande de mesure (100) selon l'une quelconque des revendications 2 à 4,
**caractérisée en ce que**
le moyen de renforcement (110) comprend des fibres individuelles (111) et/ou des fibres de basalte (116) regroupées en faisceaux de fibres (112) et/ou en rubans de fibres (113) et/ou en mèches (114), qui s'étendent le long de la direction longitudinale (L) et/ou le long de la direction transversale (Q) de la bande de mesure (100).

6. Bande de mesure selon la revendication 5,
**caractérisée en ce que**
une ou plusieurs mèches (114) composées de fibres individuelles (111) et/ou de fibres de basalte (116) assemblées, en particulier trois, quatre ou cinq mèches (114), sont disposées parallèlement les unes aux autres et espacées les unes des autres, en particulier de manière régulière, le long de la direction transversale (Q) de la bande de mesure (100) et les mèches (114) traversent la bande de mesure (100) en continu le long de la direction longitudinale (L).

7. Bande de mesure (100) selon l'une quelconque des revendications 2 à 6,
**caractérisée en ce que**
le moyen de renforcement (110) comprend des fibres de basalte (116) disposées en forme de tissu (122), en particulier sous forme de fibres individuelles (111), dans lequel les fibres de basalte (116) s'étendent en partie le long de la direction longitudinale (L) et en partie le long de la direction transversale (Q) de la bande de mesure (100).

8. Bande de mesure (100) selon l'une quelconque des revendications 2 à 6,
**caractérisée en ce que**
le moyen de renforcement (110) comprend des fibres de carbone (117) et/ou des fibres de verre (118) et/ou des fibres d'acier (119) agencées en fibres individuelles (111) et/ou assemblées sous forme de faisceaux de fibres (112) et/ou de bandes de fibres (113) et/ou de mèches (114) et/ou disposées sous forme d'un tissu (122).

9. Procédé de fabrication d'une bande de mesure (100), en particulier d'une bande de mesure (100) selon l'une quelconque des revendications 2 à 8, comprenant une matrice en matière plastique (120) ainsi qu'un moyen de renforcement (110) traversant la matrice en matière plastique (120) dans certaines zones,
**caractérisé en ce que**
- dans une première étape (A), on prépare une ou plusieurs fibres de basalte (116), en particulier sous forme de faisceaux de fibres (112) et/ou de bandes de fibres (113) et/ou de mèches (114),
- dans une deuxième étape (B), en particulier qui suit la première étape (A), on forme le moyen de renforcement (110) comportant les fibres de basalte (116) agencées, le moyen de renforcement (110) avec les fibres de basalte (116) étant noyé dans la matrice de matière plastique (120), de sorte que le moyen de renforcement (110) et la matrice de matière plastique (120) forment ensemble un composite par matière et/ou par forme, et
- au cours d'une troisième étape (B), en particulier qui suit la deuxième étape (C), la bande de mesure (100) est munie de marques de mesure (121) sur au moins une face.

10. Procédé de fabrication selon la revendication 9,
**caractérisé en ce que**
les fibres de basalte (116) sont disposées en continu au cours de la première étape (A), et le moyen de renforcement (110) avec les fibres de basalte (116) est incorporé en continu dans la matrice de matière plastique (120) par thermoformage, en particulier par contre collage, extrusion, laminage, pultrusion, moulage par injection et/ou trempage.

11. Procédé de fabrication selon l'une des revendications 9 ou 10,
**caractérisé en ce que**
la bande de mesure (100) est raccourcie à la longueur souhaitée lors d'une étape supplémentaire (Z) qui suit notamment la deuxième étape (B), dans laquelle la longueur des fibres de Basalte (116) correspond à la longueur de la bande de mesure (100).

12. Procédé de fabrication selon l'une quelconque des revendications 9 à 11,
**caractérisé en ce que**
les fibres de basalte (116) sont disposées et/ou noyées dans la matrice plastique (120) le long d'une direction transversale (Q) de la bande de mesure (100), de manière régulière et/ou ordonnée.

13. Procédé de fabrication selon l'une quelconque des revendications 9 à 12,
**caractérisé en ce que**
les fibres de basalte (116) sont disposées sous forme d'une ou plusieurs mèches (114), les mèches (114) étant enduites ou recouvertes d'un encollage lors d'une étape de préparation (V) précédant notamment la première étape (A), la composition chimique de l'encollage étant adaptée à la composition chimique de la matrice en matière plastique (120) de la bande de mesure (100).
